# EUROPEAN PATENT APPLICATION

(11) **EP 1 388 789 A1**
(43) Date of publication of application: **11.02.2004**
(21) Application number: 02724772.5
(22) Date of filing: 13.05.2002
(51) Int. Cl.: G06F 12/00, G06F 12/14, G06F 13/00, G06F 15/00, G06F 17/30, G06F 17/60

(54) **INFORMATION MANAGEMENT SYSTEM AND INFORMATION MANAGEMENT METHOD USING INFORMATION IMAGE**

(30) Priority: 15.05.2001 JP 2001145561
(71) Applicant: Sony Corporation, Tokyo 141-0001 (JP)
(72) Inventor: KOMATSU, Masashige, c/o SONY CORPORATION, Tokyo 141-0001 (JP); IIKURA, Shutaro, c/o SONY CORPORATION, Tokyo 141-0001 (JP); MIYA, Yukihisa, c/o SONY CORPORATION, Tokyo 141-0001 (JP)
(74) Representative: Horner, David Richard
(86) International application number: PCT/JP2002/004618
(87) International publication number: WO 2002/093384

(57) **Abstract**

The present invention is directed to an information management system for carrying out unitary management of information by using "information image" in which image information and related information are caused to be one handling unit to thereby carry out regulation or limitation of duplication, etc. This information management system carries out management of information which is the same as information that client carries out management in server, and carries out transfer of the information on the server to allow the client to inhibit access to the information if permission of the server is not given to thereby have ability to carry out high level information access right management.

## Description

### Technical Field

The present invention relates to an information management system, an information management method, an information utilization client unit and an information management client program which can carry out information management having high security. More particularly, the present invention relates to an information management system and an information management method, etc. which carries out management of the same information as information that client carries out management at server and carries out transfer of such information on the server, wherein the client is adapted so that access to such information cannot be made unless permission of the server is given to thereby have ability to carry out high level information access right management.

### Background Art

First, the term of "information image" used in this specification is concept in which image information and related information which prescribes at least specific processing are caused to be one handling unit. Here, it is to be noted that information image and image information are concepts clearly different. In the information image, various information can be included as related information. Further, if the information image is caused to have format that a general personal computer can display such as JPEG, GIF, etc. to include image information as its display information, access to image information that corresponding information image includes can be made by Internet Explorer by Microsoft Corporation or Netscape Navigator by Netscape Communication Corporation, etc.

### 1. With respect to related information

First, related information which is concept commonly used in the explanation of the present invention will be explained.

This related information is adapted so that in the case where there is need to allow operator of terminal to make access to information existing at a specific sever, such information is permitted to be information (URL or IP address, etc.) for specifying that information, and in the case where there is a need to allow a specific program to be run, such information is permitted to be its program name or program itself. It is a matter of course that such related information may be instruction information for acquiring new image information from electronic equipment, etc. Further, such related information may be information merely indicating specific character, numeric value or symbol.

### 2. Configuration of information image

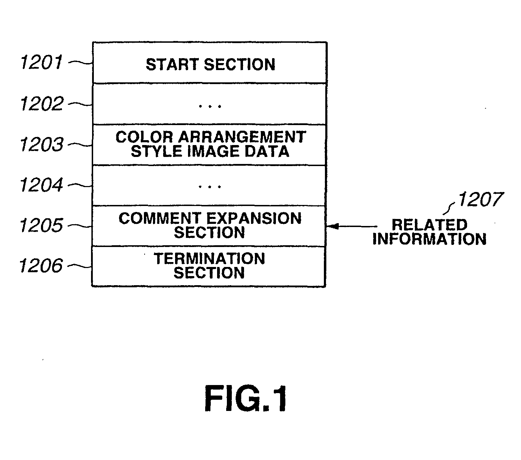

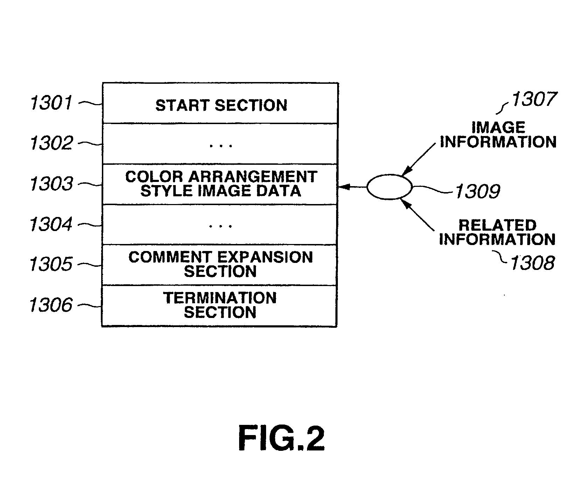

Then, the information image will be explained with reference to FIGS. 1 and 2. As previously described, the information image at least includes information of image visually displayed by image display unit as the image information and related information. Further, identifier for specifying that image may be included.

FIG. 1 is a view showing an example of format of image information in which related information is embedded.

Here, as image information, image of GIF format is taken as an example. It is to be noted that, with respect to format, in place of employing GIF form, JPG form or PCX form, etc. may be employed. Start section 1201 is field provided for identifying that this information is image information of the GIF form, and field character string of 'GIF' and its version are assigned.

Color arrangement style image data 1203 is image data in which pixels are arranged in order from left to right and from upper side to down side. Here, in the case of GIF, such data is encoded by using LZW algorithm of variable length code.

Comment expansion section 1205 can include information except for main graphic information in GIF data stream. For example, any information which are not directly used for display if ordinary, e.g., sub-graphic information, production interested person name information, comment information relating to main graphic information, and/or control information, etc. can be also included.

Termination section 1206 indicates that this data stream is terminated, and means that other parameter information, etc. is not successive thereafter. At the portion 1202 between start section 1201 and color arrangement style image data 1203, and at the portion 1204 between color arrangement style image data 1203 and comment expansion section 1205, information except for these information are included. For example, information including parameter for defying information necessary for picture image described from now, e.g., picture width, picture height and/or color resolution, etc. are assigned.

Related information 1207 is disposed at the comment explanation section 1205 as it is, or is disposed after processing such as encryption, etc. is implemented, and is collected or united as single information. Thus, as the result thereof, image information which can be discriminated from other information by single identifier is permitted to be information image in the state including specific operating information or identifier at its inside. While these explanations have been all given by GIF format, even in the case where image form of other format is employed, it is sufficient that related information is recorded in an area which can be separated from image information in this way.

Explanation will be given in connection with other embedding form into image information.

FIG. 2 is a view showing another format example of information image in which related information 1308 such as specific operating information, etc. is embedded. Also, here, as image information, picture image of GIF format is taken as an example. Also in this example, with respect to format, JPEG form or PCX form, etc. may be employed even if GIF form is not employed.

Start section 1301 is field provided for identifying that this information is image information of the GIF form in the same manner as described above, and is field in which character string of 'GIF' and its version are assigned.

Color arrangement style image data 1303 is a portion such that image data in which pixels are arranged in order from left to right and from upper side to lower side is disposed. In this case, specific operating information 1308 which is related information is caused to undergo mixing 1309 in the form of watermark into image information 1307, whereby even if that image information is displayed, specific operating information cannot be recognized as it is in view of visual sense, but image information can be visually recognized as it is. Here, the information which has been caused to undergo mixing 1309 in this way is encoded by using LZW algorithm of variable length code.

Comment expansion section 1305 ordinarily includes information except for graphic information in GIF data stream. While this field is not especially required in this example, an information provider can utilize the comment expansion section 1305 by free definition as occasion demands. In addition, related information except for the specific operation can be also included.

Termination section 1306 indicates that this data stream is terminated, and means that other parameter information, etc. is not successive thereafter.

While explanation has been given by GIF format also in all examples of picture images, even in the case where other image format is employed, if related information is recorded in the state separable from image information in this way, such image form may be employed.

### 3. Utilization form of information image

While the utilization form of information image is described in the Japanese Patent Application Laid Open No. 117845/2001 publication, explanation will be briefly given here.

With respect to information image which has been loaded from server by browser program such as Internet Explorer by Microsoft Corporation or Netscape Navigator by Netscape Communication Corporation, only image information portion that the information image includes is taken out by function of browser. The image information portion thus taken out is displayed on display device of client computer. If storage function that browser program ordinarily has is utilized, it becomes possible to handle this information image as independent file on the computer. Accordingly, it becomes possible to easily distribute such file to other person.

In the case where information image is forwarded or sent to other client (hereinafter referred to as transfer of information image) in the conventional system, such forwarding operation is carried out by electronic mail, etc. In accordance with this technique, since original information is left on the client of forwarding source, duplication (copy) is resultantly to be carried out. Thus, there was the problem that when information in which copy guard or control management must be carried out such as musical information, etc. is included in related information that information image includes, copyright holder, etc. suffers from unexpected disadvantage.

### Disclosure of the Invention

The present invention has been made with a view to reducing the above-described problems, and its object permits transfer involving copy guard or control of information such as information image, etc. without injuring operation feeling.

The present invention is directed to an information management system which carries out management of information by using information image, and provides an information management system provided with an information management apparatus and an information utilization client unit to thereby realize reduction of the above-described problems.

Here, the information management apparatus has a function as the so-called server, and at least includes a client folder management unit and a transfer management unit. The client folder management unit functions so as to record client identifier and information image disclosed to the client in an associated or related manner to have ability to carry out change of such association or relation by instruction. The transfer management unit functions so as to grasp that, with respect to information recorded at the client folder management unit, association or relation of one information image is changed into other client identifier to determine permission/denial.

The information utilization client unit at least comprises a display unit for visualizing information, an operation input unit adapted to receive operation instruction, a client folder operation unit, and an operating unit. Here, the client folder operation unit functions so as to carry out communication with client folder management unit of the information management apparatus to allow the display unit to display image information that information image recorded at the client folder management unit includes. The operating unit functions so as to carry out a predetermined operation on the basis of related information that information image according to image information instructed by the operation input unit of image information displayed on the display unit has.

Further, when the information management apparatus forwards or sends corresponding information image to client which has client identifier, and a instruction to transfer displayed information image to other client is given from client, permission/denial is determined. When permission is made, association or relation between identifier of client and information image identifier is deleted, and association or relation between the information image identifier and the other client to be transferred is carried out to allow management server to be operative so as to forward or send corresponding information image with respect to client which has other client identifier.

Moreover, the present invention is concerned with an information management apparatus functioning as a server used in the above-described information image system, and at least comprises a client folder management unit and a transfer management unit.

Further, the present invention is concerned with a method of carrying out management of information image, and is featured by mainly paying attention to the operation of the above-described information management system.

Furthermore, the present invention functions as client unit mainly used in the above-described information image system, and at least includes a client folder operation unit, and an operating unit.

The present invention is directed to program for allowing the above-described information image system to function as client unit mainly used.

Further, the present invention is directed to an information recording medium adapted so that the above-described program is recorded, and is directed to an information recording medium in which this program is read into computer to thereby permit the computer to function as client unit in the above-described information management system.

In addition, the present invention is directed to a program installed with respect to computer in which operating system is already running and for allowing computer to be operative as information management client unit, and is directed to an information recording medium adapted so that such program is recorded.

Still further objects of the present invention and more practical merits obtained by the present invention will become more superficial from the description of the embodiments which will be given below with reference to the attached drawings.

### Brief Description of the Drawings

FIG. 1 is a view showing format example of image information in which related information is embedded.
FIG. 2 is a view showing another format example of information image in which related information such as specific operation information, etc. is embedded.
FIG. 3 is a view showing the configuration of the superficial entire system viewed from operator.
FIG. 4 is a view showing the operating state of the superficial entire system viewed from operator, wherein it is shown that information image recorded at information providing server is loaded with respect to information management client unit.
FIG. 5 is a view showing the operating state of the superficial entire system viewed from operator, wherein operation when information image recorded at client unit is transferred to other client is shown.
FIG. 6 is a view showing DHTML file example that information providing server sends out to client in the case where client first registers information image.
FIG. 7 is a view showing practical configuration of the entire system.
FIG. 8 is a view showing data base configuration example within information management server of information image in the case where management is carried out by the entire system where existence of plural information images is not permitted (sole information image is only permitted).
FIG. 9 is a view showing data base configuration example within information management server of information image in the case where management is carried out in the entire system where existence of plural information images is permitted.
FIG. 10 is a view showing operating sequence of system in the case where client first registers information image.
FIG. 11 is a view showing program example in which information providing server or information management server receives request sent out from registered client in the case where client first registers information image.
FIG. 12 is a view showing superficial configuration example in the case where transfer of information image is realized through chat.
FIG. 13 is a view showing operating sequence of system in the case where transfer of information image is realized through chat.

### Best Mode for Carrying Out the Invention

Embodiments according to the invention of the present application will be described by using FIGS. 2 to 13.

Explanation will be given in order as described below.
1. With respect to the superficial configuration and the operation of this system
   1.1. Superficial configuration of this system
      1.1.1. Information providing server 101
      1.1.2. Clients 103-1, 103-2 ···
      1.1.3. Folder server 102
   1.2. Superficial operation of this system
      1.2.1. Registration of information image with respect to folder display unit
      1.2.2. Transfer of information image to other client
2. Withe respect to more practical entire system
   2.1. More practical configuration
      2.1.1. Network 401
      2.1.2. Information providing server 424
      2.1.3. Information management client 403
      2.1.4. Folder server 402
         2.1.4.1. Outline of folder server
         2.1.4.2. Data base constituting folder server
   2.2. practical operation
      2.2.1. In the case where it is permitted that only one client has one information image
      2.2.2. In the case where it is permitted that plural information images exist in the system
3. Transfer of information image
   3.1. In the case where it is permitted that only one client has one information image
   3.2. In the case where it is permitted that plural information images exist in the system
4. Other modification, etc.
   4.1. Registration request destination
   4.2. Related information and operating unit 422
   4.3. Improvement in security of information

### 1. With respect to superficial configuration and operation of this system

In the explanation of the present invention, explanation will be primarily given from the configuration of more practical system. In this case, for the purpose of facilitating understanding in the following explanation, explanation will be given from the superficial system viewed from operator of information management client unit.

### 1.1. Superficial configuration of this system

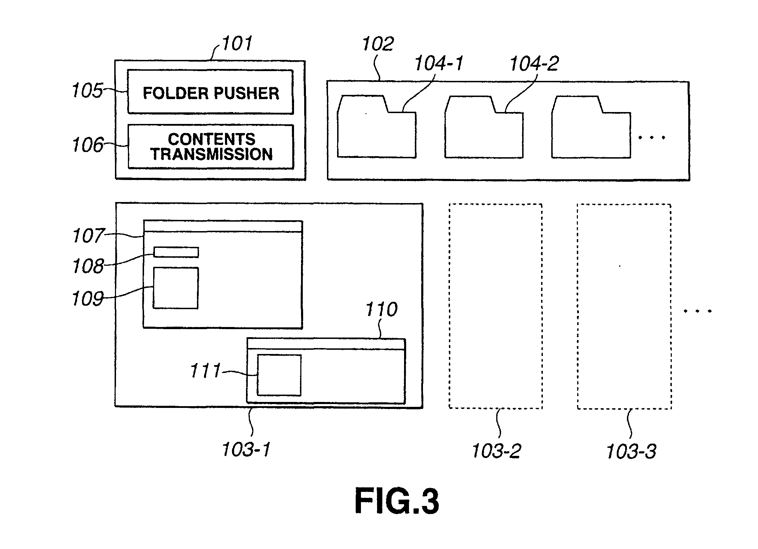

First, the configuration of the superficial entire system will be explained by using FIG. 3.

FIG. 3 shows the superficial entire system configuration viewed from operator.

The superficial entire system configuration in this embodiment at least comprises a client 103, an information providing server 101, and a folder server 102.

### 1.1.1. Information providing server 101

The information providing server 101 at least includes therein a contents transmitting unit 106 and a folder pusher 105. The contents transmitting unit 106 is operative so that when request for contents is notified through network from either one of clients to this information providing server connected to network, it transmits the content conforming to that request to the client which has presented request. The folder pusher 105 sends out specific information at a necessary timing so as to record it into folder for specific client in folder server 102 which will be described later.

### 1.1.2. Clients 103-1 103-2 ···

Client 103 is, e.g., ordinary personal computer, etc., and is caused to be of the configuration in which it is connected to network and has ability to carry out communication with information providing server 101 and folder server 102 which are directly or indirectly connected to the network. Further, at least a folder display unit 110 is adapted to be operative. Within the folder display unit, information image 111 recorded at a folder 104 for client corresponding to the next client in the folder server 102 can be displayed in accordance with operation which will be described later.

Moreover, the client 103 is adapted so that browser program 107 such as Internet Explorer by Microsoft Corporation or Netscape Navigator by Netscape Communication Corporation is operative as occasion demands. This browser program 107 is caused to be of the configuration capable of outputting request to the information providing sever 101 to receive offer of contents including information image 109. It is to be noted that instruction button 108 for causing a predetermined operation with respect to information providing server 101 may be included in addition to information image 109 in information that the contents transmitting unit 106 transmits.

### 1.1.3. Folder server 102

The folder server 102 serves to carry out management of information image to be displayed every client, wherein folders peculiar to respective clients are seemingly installed (provided) by the number of clients. The folder server 102 functions so as to carry out communication with folder display unit 110 within client unit to allow the folder display unit 110 to display the content of corresponding folder 104 for client. For example, image information that information image recorded at folder 104-1 for client 1 includes is displayed on display unit 110 displayed at client 1 (103-1), and image information that information image recorded at folder 104-2 for client 2 includes is displayed on display unit displayed at client 2 (103-2).

### 1.2. Superficial operation of this system

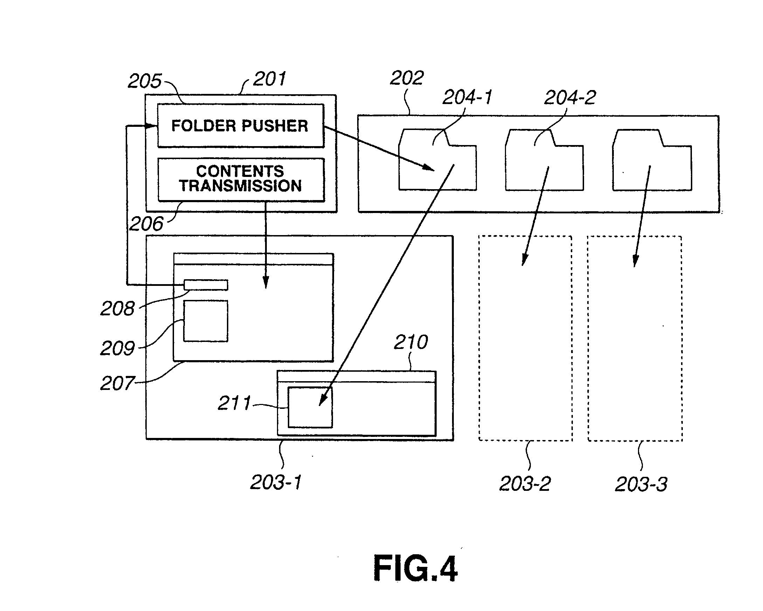

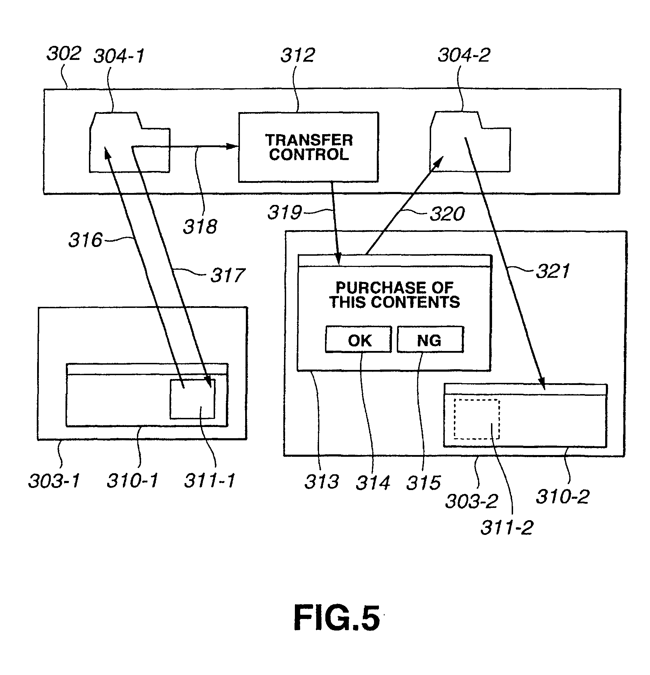

Then, superficial operation of this system will be explained with reference to FIGS. 4 and 5.

### 1.2.1. Registration of information image with respect to folder display unit

Here, first, the operation for registering information image to which access is made by browser program 207 with respect to folder display unit 210 will be described by using FIG. 4.

FIG. 4 is an operation example of the superficial entire system viewed from operator, and shows that information image recorded at the information providing server is loaded with respect to information management client unit.

Operator of client 1 (203-1) first allows browser program 207 to be run to make a request, to information providing server 201, for offer of information including information image. In response thereto, contents transmitting unit 206 included in the information providing server 201 offers its content with respect to browser program 207 of client 1 (203-1) in correspondence with this request. In this content, button 208 which instructs offer of information image is included in addition to information image 209. Operator clicks this button by mouse, etc., thereby making it possible to run specific program of specific server connected to network.

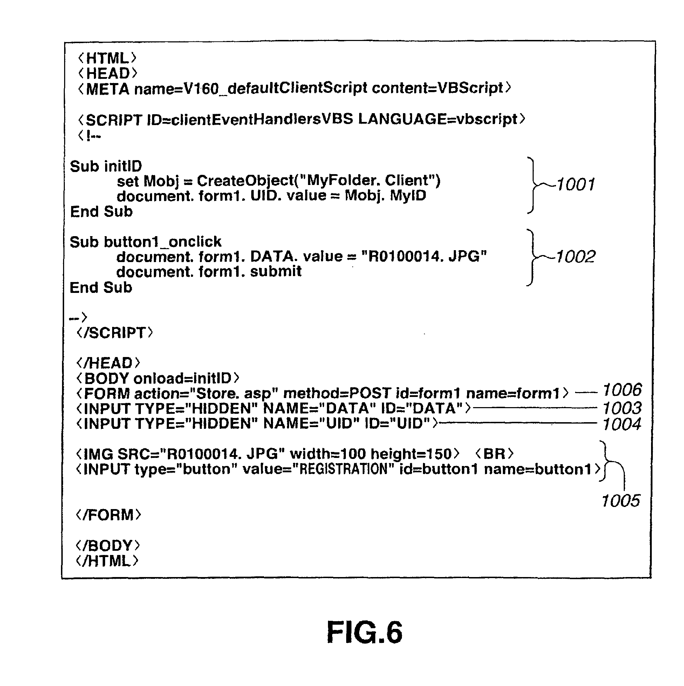

Here, HTML file example of contents to be sent is shown in FIG. 6. This HTML file is an example of contents transmitted with respect to Internet Explorer by Microsoft Corporation. With respect to browser by Netscape Communication Corporation, contents are sent by different description. However, since the technical content is not varied, the detailed explanation in this chapter is omitted.

In the HTML file, there are included a portion 1001 for taking out IDs which values are different at every client, a portion 1002 for taking out identifier of selected image information, and a portion 1005 for displaying image information that information image includes to allow browser program to display registration button corresponding thereto. Further, a variable portion 1003 for specifying kind of information image with respect to server, and a variable portion 1004 for specifying client ID are described.

Since the HTML file has the configuration as described above, when operator pushes down registration button 208, folder pusher 205 called Store.asp in information providing server 201 is started for the purpose of description of corresponding form tag 1006.

Then, when the folder pusher 205 accepts registration request from client, since client ID and ID of information image are collectively and respectively delivered or transferred, it make a request for registration of corresponding information image to specific client folder 204-1 in folder server 202 by making use of these information.

The folder server 202 accepts this information image to record corresponding information image at specific folder for client 204-1. Additionally, the folder server 202 transmits its content to folder display unit 210 of client that corresponding folder carries out management to allow the folder display unit 210 to carry out display 211.

### 1.2.2. Transfer of information image with respect to other client

Then, explanation will be given in connection with transfer operation of information image by using FIG. 5.

FIG. 5 is an operation example of the superficial entire system viewed from operator, and is a view showing the operation when information image to which access is made at client folder display unit 310-1 of client 1 (303-1) is transferred to client folder display unit of client 2 (303-2).

When operator of client 1 (303-1) desires to transfer information image corresponding to image information 311-1 displayed on the folder display unit 310-1, he makes a notification to the effect that information image is desired to be transferred to folder server 302 by using the folder display unit 310-1 or other support program (step 316). Thus, when folder 304-1 for client 1 which carries out management of this client receives such notification, it offers that information to an interclient information image transfer control unit 312 (step 318). Here, the interclient information image transfer control unit 312 makes its confirmation request so as to have ability to carry out input as to whether or not transfer of information image is accepted with respect to client to be transferred (step 319). Client 2 (303-2) displays dialog box 313 as to whether or not transfer is accepted with respect to this confirmation request. The dialog box includes a button 314 for instructing that transfer is accepted, and a button 315 for instructing that transfer is not accepted, and operator of client 2 is adapted to have ability to select either one of buttons.

In the case where operator of the client 2 makes instruction to the effect that transfer is accepted, that effect is notified to folder server 302 (step 320). Followed by this, corresponding information image which has been recorded at the original folder 304-1 for client is deleted. As the result thereof, that information image is deleted from folder display unit 310-1 on the client 1. In addition, this information image is recorded at folder 304-2 for client 2. As a result, since new information image is recorded at folder of corresponding client 2 (303-2), the folder server 302 notifies that new information image is displayed (step 321) to display information image 311-2 which has been transferred within folder display unit 310-2 of the client 2. Such application is advantageous since duplication can be limited in such cases where copyright like musical information is included in related information that information image includes. Namely, information image has the merit that when transfer is carried out from client of assignor to client unit of assignee, corresponding information image is deleted from folder of assignor by function of folder server so that duplication of information image is not left within client of assignor in transfer.

### 2. With respect to more practical entire system

Then, more practical entire system for realizing the above-mentioned scenario will be described.

### 2.1. More practical configuration

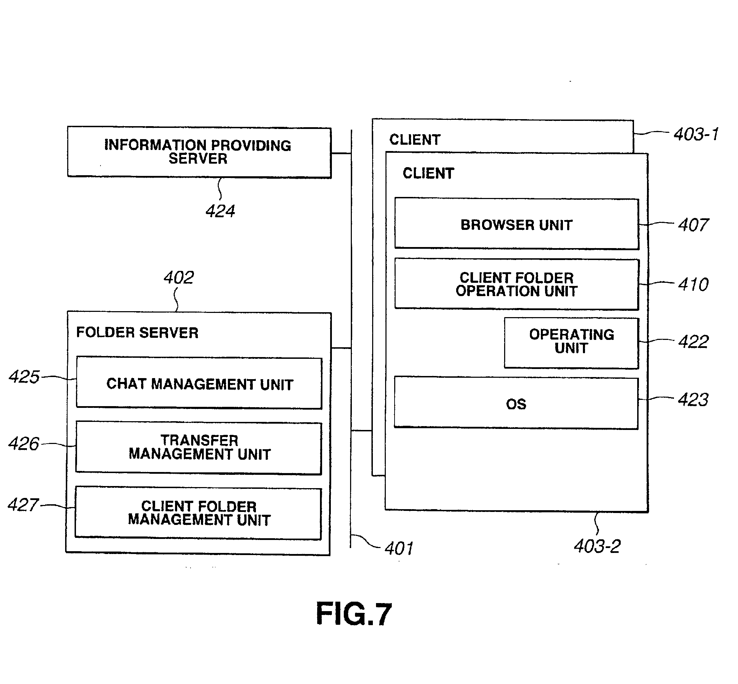

First, its configuration will be explained by using FIG. 7. FIG. 7 is an example of more practical configuration of the entire system.

Also in the more practical configuration, the entire system according to this embodiment is caused to be of the configuration comprising an information providing server 424, clients 403-1, 403-2 ···, wherein these components are directly or indirectly connected through network 401 so that they can mutually communicate with each other.

### 2.1.1. Network 401

The network 401 functions so that when units connected thereto irrespective of wire or wireless respectively have established session with respect to target units, transmission/reception of information can be carried out therebetween. For this reason, although network 401 is indicated in such a manner that it is connected by single backbone line in FIG. 7, this may be realized in the state where plural networks are combined through gateways like Internet. In addition, also with respect to its connection, there may be employed connection such that even in the case where network is temporarily connected by PPP connection, etc. even if it is not directly connected to the main line which is so-called backbone, transmission/reception of information can be carried out therebetween when session is established.

### 2.1.2. Information providing server 424

The information providing server 424 is operative so that when request for contents is notified from either one of clients through the network similarly to the information providing server 101 in the previously described superficial system, it transmits the content conforming to that request to client which has presented request, and notifies specific information at a necessary timing to a specific client folder management unit within folder server 402.

### 2.1.3. Information management client 403

Information management clients 403-1, 403-2 ··· respectively include client folder operation units 410 and operating units 422. It is desirable that the information management client 403 ordinarily comprises an OS unit 423 which carries out management of hardware resources of client unit and serves to carry out management of the operation of the entirety of the client.

Here, the function as "folder display unit" in the previously described superficial system configuration is realized by interaction of the client folder operation unit 410, the operating unit 422 and the OS unit 423 in this more practical system. A browser unit 407 is, e.g., Internet Explorer by Microsoft Corporation or Netscape Navigator by Netscape Communication Corporation, etc., and issues request to the information providing server 424 to have ability to receive offer of contents including information image.

The client folder operation unit 410 controls operation as folder display unit 110, and is adapted so that when communication between client unit and folder server and/or operation from operator are given, it carries out such an operation instruction with respect to an operating unit to carry out suitable operation corresponding to that operation.

The operating unit 422 carries out, by instruction from the client folder operation unit 410 or the OS unit 423, an operation corresponding thereto. This operating unit 422 is caused to of the configuration capable of carrying out, e.g., starting of program, reproduction of music, reproduction of streaming video from other server, etc.

The OS unit 423 is ordinary literally Operating System, and carries out management of hardware resources and/or software resource of client 403. The OS unit 423 functions so that when operation of user (not shown) is given, it notifies its operation information to necessary software module, and when request of display is made, it displays its content with respect to display device under control of this client.

### 2.1.4. Folder server 402

The folder server 402 at least comprises a transfer management unit 426, and a client folder management unit 427. It is desirable that the folder server 402 further comprises a chat management unit 425 for the purpose of easy utilization of user.

### 2.1.4.1. Outline of folder server

The client folder management unit 427 records client identifier which can independently carry out discrimination with respect to client that this server carries out management and information image disclosed to client in a manner associated with each other. Further, change of such association or relation, and recording of client identifier and information image which have been newly associated or related can be made by at least instruction, and already registered association or relation can be deleted. The transfer management unit 426 operates in cooperation with the client folder management unit 427. Further, when request of transfer of information image is made from client, its association or relation is cancelled with respect to information image associated with client ID of client which has made request in accordance with that request, and instruction is made to the client folder management unit so as to associate or relate client ID newly transferred and the information image.

In addition, it is desirable to employ an approach to make an inquiry with respect to the client transferred as to whether or not reception of that information image is carried out, whereby confirmation operation can be made such that in the case where that inquiry is "permission", the transfer processing is carried out, while in the case where that inquiry is "denial", that transfer processing is not carried out.

The chat management unit 425 is a function unit well known as Bulletin Board System (BBS), and is adapted so that when information is sent out from communication software that client has or browser program to the chat management unit, it sends out the information which has been sent out also to other client which makes access to the chat management unit.

### 2.1.4.2. Data base constituting folder server

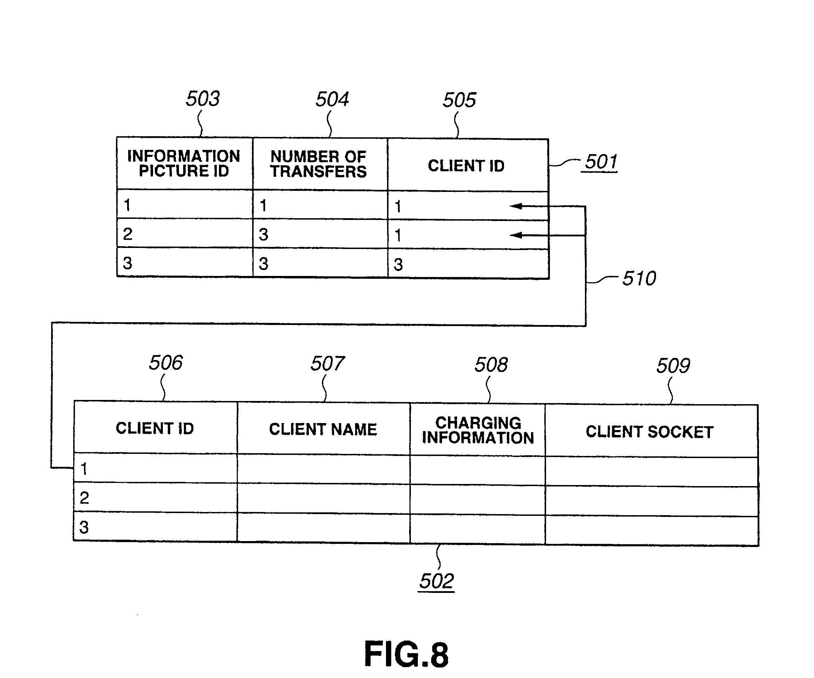

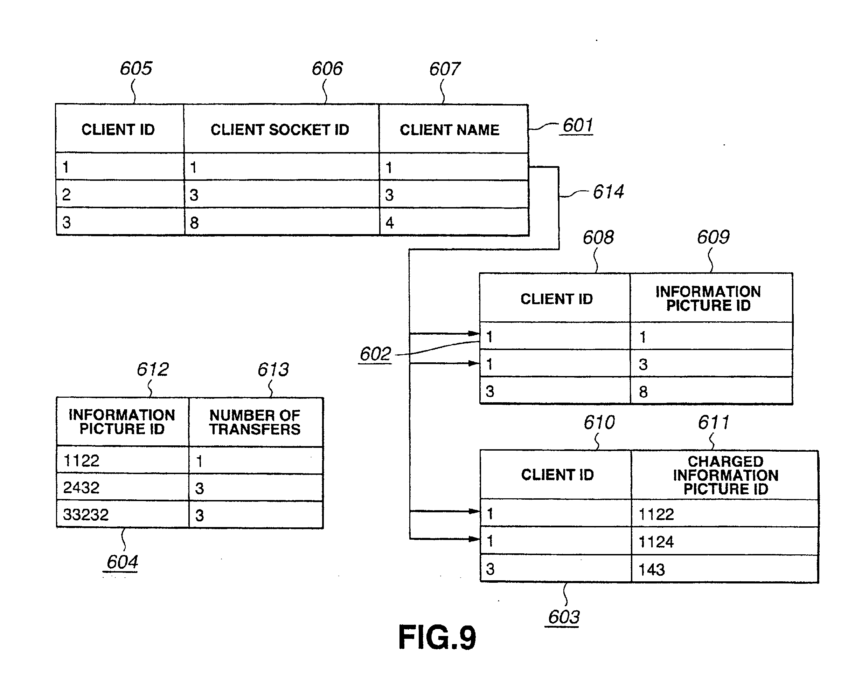

Meanwhile, with respect to folder server, even if the client folder management unit 427 and the transfer management unit 426 are not constituted as modules clearly discrete in this way, it is sufficient to employ such a configuration to produce these functions, and these units may be realized in a manner joined together. In addition, while data base is caused to serve as core here, data base of any configuration may be employed with respect to the configuration of that data base. An example of data base functioning as core which realizes these functions will be explained by using FIGS. 8 and 9.

First, explanation will be given by using FIG. 8 in connection with the case where management of information image is carried out by the entire system where existence of plural information images is not permitted, i.e., the case where possession of information image only by sole client is permitted in the system.

FIG. 8 shows a data base configuration example within information management server of information image in this case. In this example, the data base is constituted by information image management table 501, and client management table 502, and constructs relational data base with client ID being as common key. The information image management table 501 includes information image ID field 503, a number of transfers field 504, and client ID field 505. The information image ID field 503 is a field for recording identifier of information image which is information for specifying sole information image in this system. The number of transfers field 504 is a field for recording number of transfers by transfer or assignment, etc. that information image which includes corresponding information image ID carries out. The client ID field 505 is a field for recording identifier which identifies client which has that information image.

It is to be noted that information image itself may be recorded in the state supplemented to the field of this information image management table 501.

The client management table 502 is composed of client ID field 506, client name field 507 serving as attribute information according to client, charging information field 508, and client socket field 509.

The client ID field 506 is a field for recording identifier which identifies client which has that information image similarly to the client ID field 505 in the information image management table 501. The client name field 507 is a field for recording attribute information with reference to client, and may be constituted as any field such as street address, E-Mail address, etc. in addition to name. The charging information field 508 is a field for recording charging information with respect to client caused to undergo management in this client management table 502, and is caused to be information integrated as buying and selling cost in accordance with content/cost of information image serving as its content when assignee has made permission with respect to transfer permission/denial check that the unit for controlling transfer between client and folder has carried out. The client socket field 509 is a field for recording information which specifies communication pathway with respect to client caused to undergo management by the folder sever and connected to the folder server at present. Accordingly, in the case where various communications are carried out between clients, the folder server is adapted to have ability to carry out transmission, etc. by making use of socket information recorded at this client socket field.

On the other hand, explanation will be given by using FIG. 9 in connection with the configuration of data base with respect to the case where management is carried out by the entire system where existence of plural information images is permitted.

FIG. 9 shows a data base configuration example within information management server of information image in this case.

In this example, the data base is composed of client management table 601, client folder information recording table 602, charging management table 603, and information image transfer management table 604, and constructs relational data base with client ID or information image ID being as common key.

The client management table 601 includes client ID field 605, client socket ID field 606 and client name field 607.

The client ID field 605 is a field for recording identifier which identifies client which has that information image similarly to client ID field 505 at the information image management table 501. The client socket ID field 606 is a field for recording information which specifies communication pathway with respect to client caused to undergo management by the folder sever and connected to the folder server at present. Accordingly, in the case where various communications are carried out between clients, the folder server is adapted to have ability to carry out transmission, etc. by making use of socket information recorded at this client socket field. The client name field 607 is a field for recording attribute information with reference to client, and may be caused to be any information such as street address, E-Mail address, etc. in addition to name.

The client folder information recording table 602 is adapted to have ability to carry out association or relation as to which information image a person who has client ID has. Further, for this reason, the client folder information recording table 602 is composed of client ID field 608 and information image ID field 609. The client ID is field serving as key constituting the relation between the client ID and the client management table, and is related to client ID field 605 within the client management table 601. The information image ID field 609 is adapted so that there is recorded identifier of information image to be displayed on a display unit of client which has corresponding client ID.

The information image transfer management table 604 is a table which carries out management of the number of transfers of a specific information image, and is adapted so that information image ID field 612 and the number of transfers field 613 are recorded in an associated or related manner.

The charging management table 603 is a table for recording charging information with respect to client, and is composed of client ID field 610 and charged information image ID field 611. Further, when information image to be charged is transferred and this information image is accepted, new record is recorded. For this reason, this charging management table 603 can be utilized for charge demand carried out with respect to client every predetermined month, etc.

### 2.2. Practical operation

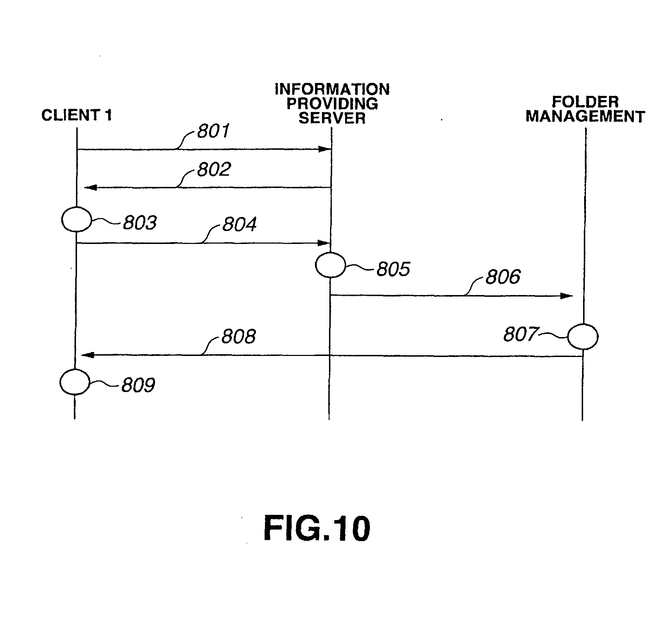

Then, explanation will be given by using FIG. 10 in connection with how client information image is recorded and utilized at the own client folder display unit in the more practical system which has been explained with reference to FIG. 7.

FIG. 10 is a view showing operating sequence of system in the case where client first registers information image.

Here, there exist the case where it is only permitted that one information image is possessed by one client at the entirety of the system, and the case where its possession is permitted with respect to plural clients. Here, explanation will be given in connection with respective cases in accordance with the data base example. In both cases, explanation will be given by using FIG. 10 with respect to data flow.

### 2.2.1. Case where it is permitted that one information image is only possessed by one client.

In this case, while either the form of the data base shown in FIG. 8 or the form of the data base shown in FIG. 9 may be used, explanation will be carried out by employing the data base shown in FIG. 8 in this explanation.

First, client makes access to home page where information images to which access is desired to be made are arranged with respect information providing server (step 801). The information providing server sends back HTML file as shown in FIG. 6 in accordance with this request (step 802).

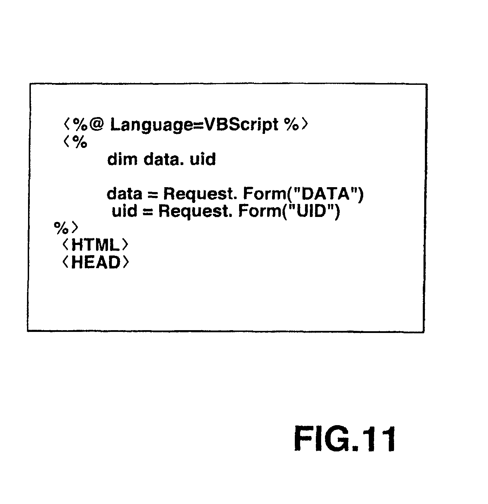

Here, in the case where there exists content that client desires to register at the client folder display unit among contents displayed, when button for registration instruction corresponding thereto is pushed down (step 803), notification to that effect is carried out with respect to the information providing server in a manner accompanying with ID of client and identifier which specifies corresponding information image. The information providing server receives this notification to acquire that client ID and information image ID. A portion of program for this acquisition is shown in FIG. 11. This shows acquisition procedure for these information in the case where IIS by Microsoft Corporation is utilized. Then, the information providing server generates a notification of request so as to register corresponding information image at that client with respect to folder server (step 805) to carry out this generated notification (step 806).

In accordance with this request, the folder server adds new record into information image management table 501 in order to associate corresponding information image with that client. In this instance, with respect to information image ID field 503 and client ID field 505, recording is carried out by using information image ID and client ID which have been included in request notification of registration, and, e.g., 1 is recorded as initial value with respect to the number of transfers (step 807). It is to be noted that when information image ID which attempts to be recorded already exists at this time, the registration thereof is stopped, and it is transmitted to client which has issued that request. Thus, it becomes possible to prevent that the same information image exists at plural clients in the server.

Then, relation with respect to client ID field 506 within client management table 502 recorded in advance is searched to make access to client socket field 509. In the case where corresponding client is client connected to the folder server at present, corresponding information image is transmitted to the client display unit of that client to make an instruction so as to carry out that display (step 808). Further, the client unit acquires the forwarded information image at the client display unit to take out image information included therein to operate so as to carry out display on that display device. Thus, information image provided at home page can be handled on display device of the client. The folder display unit of the client unit detects related information on the basis of operation of operator to have ability to carry out operation by the function of operating unit 422 on the basis of that related information. For example, in the case where this operation is URL of site which delivers or distributes streaming video, access to that URL is provided, thus making it possible to carry out reproduction of streaming video.

### 2.2.2. Case where plural information images are permitted in the system

In this case, it is desirable to use data base as shown in FIG. 9 as data base. Also in this case, explanation will be given along the flow of FIG. 10.

First, client makes access to home page where information images to which access is desired to be made are arranged with respect to information providing server (step 801). The information providing server sends back HTML file as shown in FIG. 6 in accordance with this request (step 802).

Here, in the case where there exists content that the client desires to register at the client folder display unit among displayed contents, when button for registration instruction corresponding thereto is pushed down (step 803), notification to that effect is made to information providing server in a manner accompanying with ID of client and identifier which specifies that information image (step 804).

The information providing server receives this notification to acquire that client ID and information image ID. A portion of program for this acquisition is shown in FIG. 11. This shows acquisition procedure for these information in the case where IIS by Microsoft Corporation is utilized. Then, the information providing server generates notification of request so as to register corresponding information image at that client with respect to the folder server (step 805) to carry out notification of this request (step 806). In accordance with this request, the folder server adds, as new record, client ID and information image ID in an associated or related manner with respect to client folder information recording table 602.

Here, in the case where that information image is paid information image, the folder server adds, as new record, the client ID and the information image ID to be charged in an associated or related manner with respect to charging management table 603at the same time (step 806). Further, data included in the charging management table is calculated at a predetermined time later, thereby making it possible to carry out debit note processing, etc.

Since information image corresponding to the folder display unit that corresponding client carries out management is displayed at the time point when record is supplemented in this way, notification to the effect that it is displayed on the client display unit in a manner accompanying with that information image is made with respect to the client (step 808) to display that information image on the client unit.

In this case, on the client unit, there is carried out an operation so as to acquire forwarded information image at the client display unit to take out image information included therein to display it on that display device. Thus, information image provided at home page can be handled on display device of the client unit. The folder display unit of the client detects related information on the basis of operation of operator. In the case where this operation is URL of site which delivers or distributes streaming video, the operating unit 422 provides access to that URL on the basis of that related information, thus making it possible to carry out reproduction of streaming video.

### 3. Transfer of information image

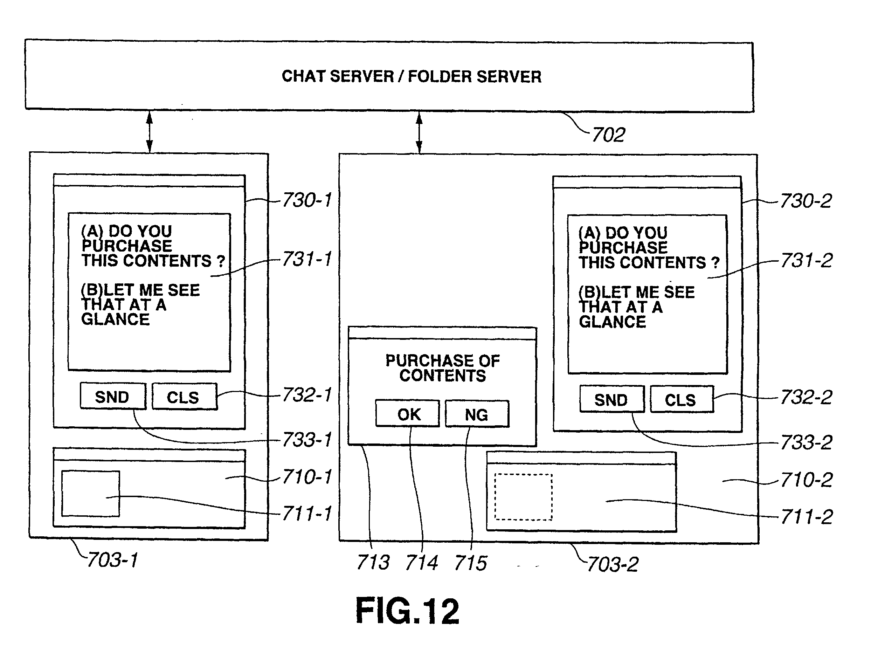

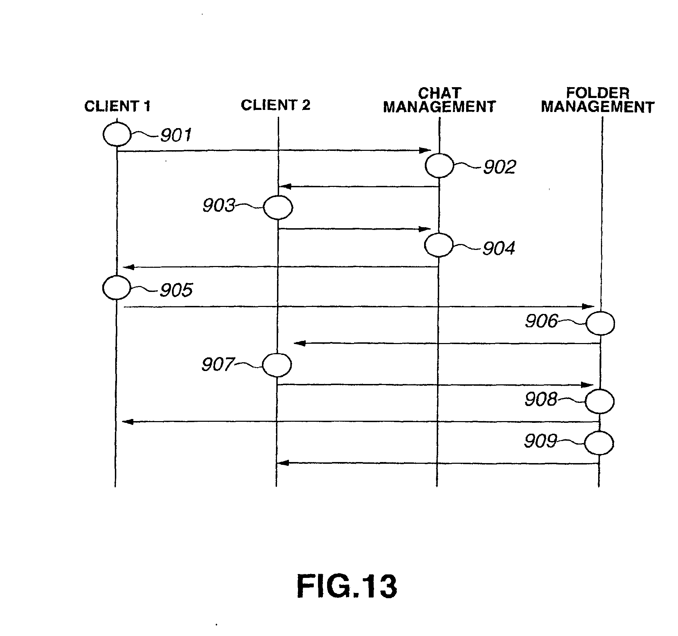

Then, the operation in the case where transfer is carried out between information image clients will be described with reference to FIGS. 12 and 13.

Here, FIG. 12 is a view showing an example of the superficial configuration in the case where transfer of information image is realized through chat. First, scenario with respect to transfer of information image will be explained by using this figure. This is the scenario that the client 1 transfers information image 711-1 held at that folder display unit (703-1) to client 2 (703-2) while carrying out chat.

It is assumed that operator of client I carries out conversation with client 2 by using conversation (chat) picture 731-1 by character displayed within chat program 730-1. In this conversation, it is introduced that information image that the client 1 has is desired to be sent to the opponent. To actualize this, information image 711-1 present at the folder display unit is selected, and instruction is made by clicking transmitting button 733-1 in chat program, etc. When instruction is made in this way, that information arrives at folder server 702 including chat server to display dialog box 713 as to whether or not this information is accepted on display device of client 2 (703-2). Further, in the case where operator of client 2 permits to purchase contents, he clicks OK button 714, whereas in the case where he does not permit to purchase it, he clicks denial (NG) button 715. This information is notified to the folder server for a second time. Thus, in the case where purchase of contents is permitted, transfer of actual information image is realized. Further, transfer between folders of information image exists in the folder server, and image information 711-2 that corresponding information image includes is displayed within folder display unit 710-2 in the client 2 as the result thereof. At times subsequent thereto, operator carries out various operations with respect to the folder display unit in the client 2, thus making it possible to carry out various operations based on related information that information image has.

Then, explanation will be given with reference to FIGS. 7, 8 and 13 in connection with more practical signal flow of this scenario.

FIG. 13 is a view showing operation sequence of the system in the case where transfer of information image is realized through chat.

Here, explanation will be given in connection with both the case where the configuration shown in FIG. 8 is employed as data base and the case where the configuration shown in FIG. 9 is employed as data base.

### 3.1. Case where it is only permitted that only one client has one information image

Here, explanation will be given on the premise that data base shown in FIG. 8 is used. It is to be noted that while even if data base configuration shown in FIG. 9 is employed in connection with duplication management, realization can be made, but its explanation is omitted here.

First, when message which makes an offer of transfer of information image is prepared on the premise that client 1 and client 2 carry out chat with each other (step 901), that message arrives at chat management unit 425 within folder server. The chat management unit once records that message thereafter to forward or send it to the client 2 in a predetermined format. The message which has been forwarded or sent is processed by chat program on the client 2, and its display is carried out (step 903). When message to the effect that agreement to that message is made is prepared and is sent to the chat management unit, the chat management unit records this message to send that message back to the client 1 in a predetermined format (step 904).

Further, operator of the client 1 transmits information image that the client 1 has to the folder server (step 905), and the folder server generates request of confirmation with respect to client by action of transfer management unit 426 (step 906) to transmit that request to the client 2. When permission/denial information thereof is generated by operator at the client 2 (step 907), that information is transmitted to the folder server. When operator of client 2 makes permission, the folder server retrieves client ID indicating client 1 at information image management table 501 and record to which information image ID to be transferred corresponds to make rewrite operation into client ID indicating client 2 with respect to client ID of that record. Further, a request which deletes information image displayed on the client 1 is transmitted to the folder display unit of the client 1 (step 908). In addition, instruction is transmitted to the folder display unit displayed on the client 2 so as to display image information according to the information image (step 909). In a manner as described above, the system functions so that owner of information image therewithin is not duplicated.

### 3.2. Case where plural information are permitted within the system

In this case, explanation will be given on the premise that data base shown in FIG. 9 is used.

Even if this data base is used, it is also possible to guarantee that information image becomes sole owner within the system, but this will be described later. Here, the case where distribution of plural information images can be made will be described. Also here, explanation will be given by using FIG. 13 which is the same also in connection with data flow on the premise that client 1 and client 2 are carrying out chat with each other.

When message which makes an offer of transfer of information image is prepared (step 901), that message arrives at chat management unit 425 within folder server. The chat management unit once records that message thereafter to forward or send it to client 2 in a predetermined format. The message which has been forwarded is processed by chat program on client 2, and its display is carried out (step 903). When message to the effect that agreement to that message is made is prepared to send it to chat management unit, the chat management unit records this message to send that message back to client 1 in a predetermined format (step 904).

Further, operator of the client 1 transmits information image that the client 1 has to the folder server (step 905), and the folder server generates request of confirmation with respect to client by operation of transfer management unit 426 (step 906) to transmit that request to the client 2. When permission/denial information thereof is generated by operator at the client 2 (step 907), that information is transmitted to the folder server. When operator of the client 2 makes permission, the folder server newly associates client ID indicating client and the information image ID so that new record is provided to supplement it to client folder information recording table 602. Further, there is transmitted instruction so as to display image information according to corresponding information image with respect to folder display unit displayed on the client 2 (step 909). The system functions so that owner of information image therewithin is not duplicated.

It is to be noted that, in order to allow the system to function so that owner of information image therewithin is not duplicated here, there may be employed an approach such that the portion where new record is supplemented is not caused to be new record, and record where client ID indicating client 1 at client folder information recording table 602 and information image ID to be transferred are caused to correspond to each other is retrieved to rewrite client ID of that record into client ID indicating client 2. In addition, at the time point when this processing is completed, there is carried out instruction to delete corresponding information image from the folder display unit with respect to the client 1. When such an approach is employed, it becomes possible to maintain uniqueness of information image within the system.

### 4. Other modification, etc.

### 4.1. Registration request destination

While, in the above-described explanation, in registering, at the folder display unit, information image displayed at home page, that request is carried out with respect to information providing server to allow the folder server 202 to carry out registration processing by function of folder pusher 205 as the result thereof, request for registration may be also made directly from the client to the folder server without limiting to such implementation. The reason why such an approach is not employed in the above-mentioned example is that there are instances where owner of the information providing server desires to grasp what contents are frequently utilized, and it is advantageous to carry out construction in a manner of the previously mentioned example at that time.

### 4.2. Related information and operating unit 422

Since data used in the operation at the client unit is not limited to streaming data as related information that information image includes, but may be widely used for data in which security is high such as document information, etc., there may be also employed an operation to carry out such a processing to decode/display this.

### 4.3. Improvement in security of information

With a view to improving security of related information, prior to the operation of the operating unit 422 at the client unit, it is desirable to further ask folder server 402 as to whether or not proper transfer of corresponding information image at client operative on the basis of related information has been carried out. By employing such an approach, even if unfair information image is obtained to display it within client, it is impossible to carry out operation unless permission of folder server is given. Thus, it becomes possible to carry out reliable information management.

### 4.4. Exchange of client unit

It should be noted that management of information image is carried out at the server side as in the present invention so that exchange of client unit can be easily carried out. Namely, in this embodiment, since association or relation is made between the folder display unit within the client and the client folder management unit within the folder server, even if computer according to the client is changed, manageability of information image is not lowered. Namely, even if PDA such as mobile telephone, etc. is used to access folder server from the external in place of use form such that ordinary desk-top computer is used as client unit in home, as long as certification of log-in name, etc. is made, it becomes possible to maintain uniqueness of operator.

### Industrial Applicability

As described above, the present invention carries out batch or unitary management of information image including information caused to undergo management in the server, thereby making it possible to prepare the system in which duplication, etc. cannot be carried out. Thus, the present invention greatly contributes to delivery or distribution of musical data in which copyright management, etc. is rigorous.

## Claims

1. An information management system adapted for carrying out management of information by using information image in which image information and related information related to the image information are caused to be one handling unit,
the information management system comprising:
(a) an information management unit comprising a client folder management section for recording client identifier and information image disclosed to client in an associated or related manner to carry out change of association or relation thereof by instruction, and a transfer management section for grasping that association or relation of one information image is changed into other client identifier with respect to information recorded at the client folder management section to determine permission/denial; and
(b) an information utilization client unit comprising a display section for at least visualizing information, an operation input section for receiving operation instruction, a client folder operation unit for carrying out communication with the client folder management section to display, on the display section, image information that information image recorded at the client folder management section includes, and an operating section for carrying out a predetermined operation on the basis of related information that information image according to image information instructed by the operation input section among image information displayed on the display section has,
(c) wherein the information management unit forwards or sends corresponding information image to client which has client identifier thereof,
whereby when a instruction to transfer displayed information image to other client is made from the client, it determines permission/denial thereof, and when permission is made, it deletes association or relation between identifier of the client and the information image identifier, and to carry out association or relation between the information image identifier and the other transferred client to allow a management server to forward or send corresponding information image to client which has the other client identifier.

2. An information management apparatus adapted for carrying out management of information by using information image in which image information and related information related to the image information are caused to be one handling unit,
the information management apparatus comprising:
a client folder management unit for recording client identifier and information image disclosed to client in an associated related manner to carry out change of association or relation thereof by instruction; and
a transfer management unit for grasping that association or relation of one information image is changed into other client identifier with respect to information recorded at the client folder management unit to determine permission/denial.

3. An information management method of carrying out management of information by using information image in which image information and related information related to the image information are caused to be one handling unit,
the information management method comprising:
recording client identifier and information image identifier in an associated or related manner in a management server;
allowing the management server to forward or send corresponding in formation image to client which has the client identifier;
determining permission/denial when a instruction to transfer displayed information image to other client is made from the client;
deleting association or relation between identifier of the client and the information image identifier, and carrying out association or relation between the information image identifier and the transferred other client when permission is made; and
allowing the management server to forward or send corresponding information image to client which has the other client identifier.

4. An information utilization client unit for carrying out information utilization by using information image in which image information and related information related to the image information are caused to be one handling unit,
the information utilization client unit comprising:
a display unit for at least visualizing information;
an operation input unit for receiving operation instruction;
a client folder operation unit for carrying out communication with an information management apparatus in which client identifier and information image disclosed to client are recorded in an associated or related manner to allow a display unit to display image information that information image related to own client identifier recorded at the information management apparatus includes; and
an operating unit for carrying out a predetermined operation on the basis of related information that information image according to image information instructed by the operation input unit of image information displayed on the display unit has.

5. An information management client program adapted so that computer is caused to function as the information management client unit as set forth in claim 4.

6. An information recording medium adapted so that the information management client program as set forth in claim 5 is recorded.

7. An information management client program for operating computer comprising a display unit for at least visualizing information and an operation input unit for receiving operation instruction as an information utilization client unit which carries out information utilization by using information image in which image information and related information related to the image information are caused to be one handling unit,
wherein the computer is caused to generate
a client folder operation function to carry out communication with an information management unit in which client identifier and information image disclosed to client are recorded in an associated or related manner to allow a display unit to display image information that information image related to own client identifier recorded at the information management unit includes, and
an operating function to carry out a predetermined operation on the basis of related information that information image according to image information instructed by the operation input unit of image information displayed on the display unit has.

8. An information recording medium adapted so that the information management client program as set forth in claim 7 is recorded.
